# EUROPEAN PATENT APPLICATION

(11) **EP 4 586 167 A1**
(43) Date of publication of application: **16.07.2025**
(21) Application number: 24151385.2
(22) Date of filing: 11.01.2024
(51) Int. Cl.: G06Q 10/101, G06Q 30/012, G06Q 50/10, G06Q 50/18, G06Q 50/40, G06Q 10/0635

(54) **COMPUTER-IMPLEMENTED METHOD FOR DETERMINING AT LEAST ONE COMPUTER-EXECUTABLE CONTROL INSTRUCTION**

(71) Applicant: Siemens Aktiengesellschaft, 80333 München (DE)
(72) Inventor: Joanni, Andreas, 80337 München (DE)
(74) Representative: Siemens Patent Attorneys

(57) **Abstract**

The invention relates to a computer-implemented method for determining at least one computer-executable control instruction, comprising the steps: a. Providing technical information regarding a technical system or at least one technical component of the technical system (S1); b. Providing at least one agreement between at least two parties concerning at least one associated agreed object or at least one agreed service (S2); wherein the at least one agreement comprises at least one agreement condition and at least one penalty; wherein the at least one penalty is due in the case that the at least one agreement condition is violated; c. Generating the at least computer-executable control instruction by modeling the at least one agreement commonly with the technical information using a formal description (S3); and d. Providing the at least one computer-executable control instruction to handle the penalty (S4).

Further, the invention relates to a corresponding computer program product and technical system.

## Description

### 1. Technical field

The present invention relates to a computer-implemented method for determining at least one computer-executable control instruction. Further, the invention relates to a corresponding computer program product and technical system.

### 2. Prior art

Usually, several agreements have to be negotiated for the involved parties during the course of the development and the delivery of a complex technical system. The parties can be providers, customers and suppliers. Thereby, the agreements relate to the technical system and its requirements. The technical systems (like e.g. railway systems) need to comply with the technical requirements, inter alia with respect to reliability, availability and maintainability and many others. This, in turn, requires and is reflected in corresponding and appropriate conditions specified in the agreements, such as costs, maintenance intervals, warranties and penalties.

The agreement can be designed as contract. Thereby, a contract can be interpreted in the common sense of the term as a legally binding agreement between two contractual parties, e.g. a manufacturer, the aforementioned supplier and a customer. Accordingly, the contracts can be defined e.g. as supplier contracts and customer contracts. Further, the contract specifies the contractual object in the form of contractual terms, such as delivery date and warranty.

In the context of modern railway industry, reliability and availability are of utmost importance. The passenger demand is growing and the passengers have high expectations on a modern mass transport solution, like trains. Hence, this poses challenges on train manufacturers, owners, and operators to achieve the highest degree of reliability and availability to service their customers, but at the same time increase the efficiency and the profitability when operating and/or maintaining the trains or the rail infrastructure.

Consequently, service level agreements are typically in place between the parties involved in the train projects (such as manufacturer, operator, owner) to ensure that the target values are met regarding e.g. reliability and availability (more generally performance). This is typically done by stipulating penalties, if the agreed service levels are not met. These can be expressed in a quite complex manner and contractual logic. The penalties can be designed as liquidated damages.

Further, it is complicated by interrelated contractual agreements between different parties involved. Moreover, these service level agreements can extend over long periods of time (up to 30 years), and therefore these potential penalties may heavily impact the profitability of the projects.

There is a need to integrate the information of the contractual logic of the service level agreements and the associated financial implications like penalties in an efficient manner to maximize the benefit for the involved parties. This information is also essential to enable an optimal operation and maintenance of rolling stock or other railway assets.

It is therefore an objective of the invention to provide a computer-implemented method for determining at least one computer-executable control instruction, which leads to a reduced number of penalties.

### 3. Summary of the invention

This problem is according to one aspect of the invention solved by a computer-implemented method for determining at least one computer-executable control instruction, comprising the steps:
a. Providing technical information regarding a technical system or at least one technical component of the technical system;
b. Providing at least one agreement between at least two parties concerning at least one associated agreed object or at least one agreed service; wherein
   the at least one agreement comprises at least one agreement condition and at least one penalty; wherein
   the at least one penalty is due in the case that the at least one agreement condition is violated;
c. Generating the at least computer-executable control instruction by modeling the at least one agreement commonly with the technical information using a formal description; and
d. Providing the at least one computer-executable control instruction to handle the penalty.

Accordingly, the invention is directed to a computer-implemented method for determining at least one computer-executable control instruction. The instruction is designed to handle the penalty. More specifically, the instruction aims at avoiding or at least reducing potential penalties.

In a first step, the technical information regarding the technical system or one or more technical components of the technical system is provided. In other words, the technical information can refer to the technical system as a whole or solely a part of the technical system. The technical components can be designed as hardware components or software components. The technical information can comprise diverse and distinct information, such as current state of the technical system or technical components, the operating mode of the technical system or the technical components, size of the technical system or the technical components, resource consumption of the technical system or the technical components, number of the technical components, the infrastructure that the technical system is operated on, maintenance guidelines etc.

In the next step the at least one agreement between the at least two parties concerning the at least one associated agreed object or the at least one agreed service is provided. The agreement comprises the at least one agreement condition and the at least one penalty.

The input data can be received as input for the generation step. The input data comprises the technical information and the agreement. The input data can be received and/or transmitted via one or more interfaces of a technical unit, wherein the technical unit can be designed as any computing unit. The input data can be received and/or transmitted using a formal description, like a domain specific language (DSL).

The input data or part thereof can be predefined, stored in a storage unit and/or retrieved from the storage unit.

Thereby, the agreement can be designed as contract. The agreement condition can be considered as requirement, term or clause which has to be fulfilled or met. In case of a contract as agreement, the agreement condition can be equally referred to as contractual condition. The at least one penalty is due in the case that the at least one agreement condition is violated. According to which, in other words, the agreement condition and also agreement is not fulfilled or not met by at least one party.

Referring to a rail-way system as exemplary technical system, the agreement condition can be designed as availability of one or more trains. Further exemplary agreement conditions include price and warranty. If an agreed or requested train as exemplary agreed object is missing in service as and when required, hence not available at all or delayed, the agreement condition is violated and the penalty will be due.

The penalty can be designed as financial implication. For example, the violation of the agreement condition triggers violation costs.

The at least one agreement is modeled commonly with the technical information by means of the formal description. This results in the at least computer-executable control instruction, which is provided in the last step as output.

Referring to the aforementioned rail-way system, an exemplary control instruction can instruct to replace the missing or delayed train by another train to minimize or to avoid the penalty. Another exemplary control instruction can instruct to determine which of the available trains (i.e., the ones which are not undergoing maintenance at that time) should be moved to which train station so as to minimize or to avoid the penalty.

The present invention ensures the incorporation of the contractual logic of agreements, the associated penalties and technical information in an efficient and reliable manner into an executable model. This executable model is amenable to optimization. This way, an optimized operation and/or other optimized processes of the underlying technical system is guaranteed. Other processes include maintenance processes.

In other words, the contractual aspects and technical aspects are available in an integrated and formalized manner that allows evaluation and subsequent exploration of alternatives regarding operation and maintenance.

As a result, the penalties are significantly reduced or even avoided. The involved parties like railway operators or manufacturers can determine and influence, based on the generated control instructions, which agreements or contracts can be met and at what costs in an efficient manner, also considering supplier constellations, capabilities, and contractual stipulations. As a consequence, the degree of the contract fulfillment and the benefit for the customers and the operators are increased.

Moreover, the operational strategies which satisfy certain optimality criteria can thereby be automatically derived based on the agreements. Different technical (operational etc.) and contractual alternatives can be explored. This enables decision-making as to operation and maintenance alternatives for maximizing the benefit for customers and operators.

The present invention allows for an optimal operation and maintenance and thereby leads to a reduced number and/or amount of penalties.

In an aspect the technical system is a traffic engineering system, preferably a rail-way system. Accordingly, the preferred technical system is the rail-way system such as a train fleet. Alternatively, the technical system can be designed as industrial plant or any other technical system. The choice of the technical system can depend on diverse criteria, such as the involved party as customer, the agreement and specific agreed object or agreed service.

In a further aspect the at least one agreement is a contractual agreement, preferably a Service Level Agreement.

In a further aspect the technical information comprises at least one determined state of the technical system or at least one determined state of the at least one technical component of the technical system. Accordingly, the technical information can comprise any information related to or associated with the technical system or its components. The advantage is that the technical information can be pre-defined between the parties of the agreement depending on the agreed object, the agreed service, the specific use case, the underlying technical system and/or any other conditions.

In a further aspect the at least one agreement condition is a condition selected from the group comprising:
Date of delivery of the at least one agreed object or at least one agreed service, date of execution of the at least one agreement, price of the at least one agreed object or at least one agreed service, related costs, amount of the at least one agreed object or the at least one agreed service, duration of the agreement, duration of a warranty period and a warranty condition. The advantage is that the agreement condition can be pre-defined between the parties of the agreement in a flexible manner.

In a further aspect the formal description is a domain specific language. The advantage is that the description can be close to the technical description or language of agreements, and then the control instructions are generated efficiently.

In a further aspect the computer-implemented method further comprises executing the at least one computer-executable control instruction on a computing unit or a technical system. Accordingly, the control instruction can be immediately executed on any computing unit or technical system. The advantage is that the control instruction is efficiently executed. As a consequence, the penalty is handled without wasting time and hence minimized in a fast manner. This way, the benefit for both parties is optimized.

In a further aspect the computer-implemented method further comprises
- Outputting the at least one computer-executable control instruction;
- Storing the at least one computer-executable control instruction in a storage unit;
- Displaying the at least one computer-executable control instruction on a display unit;
- Transmitting the at least one computer-executable control instruction to a computing unit; and/or
- Evaluating the at least one computer-executable control instruction.

Accordingly, the input data, data of intermediate method steps and/or resulting output data can be further handled. The output data is in particular the at least one computer-executable control instruction. The instruction can be extended with further output information, such as modeling information or technical information. One or more method steps can be performed after providing the output data. The method steps can also be described as actions or measures.

These actions can be performed by one or more technical units, such as computing unit or robot unit. The actions can be performed gradually or simultaneously. Actions include e.g. storing and processing steps. The advantage is that appropriate actions can be performed in a timely manner.

For example, the control instruction can be transmitted to a party of the agreement, a technical expert or a computing unit for evaluation. The control instruction can be reviewed and hence undergo a post-processing step or additional check before being released for execution. The control instruction can be approved and confirmed or rejected depending on the evaluation result. For example, the control instruction solely minimizes the agreed penalty and the involved party requests to eliminate or replace the penalty. The control instruction can be rejected and adapted depending on the request before being executed.

A further aspect of the invention is a computer program product directly loadable into an internal memory of a computer, comprising software code portions for performing the steps of the aforementioned computer-implemented method when said computer program product is running on a computer.

A further aspect of the invention is a technical system for performing the aforementioned computer-implemented method.

### 4. Short description of the drawings

In the following detailed description, presently preferred embodiments of the invention are further described with reference to the following figures:

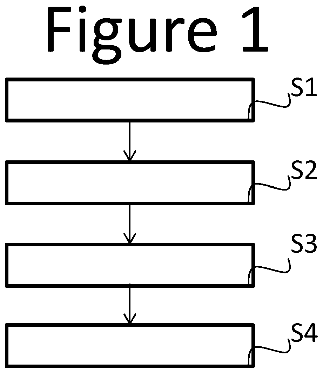

- Fig. 1: illustrates a flowchart of the computer-implemented method according to the invention.

### 5. Detailed description of preferred embodiments

- Fig. 1: illustrates a flowchart of the computer-implemented method according to the invention.

First, technical information regarding a technical system or at least one technical component of the technical system is provided S1.

In a second step at least one agreement between at least two parties concerning at least one associated agreed object or at least one agreed service is provided S2. The at least one agreement comprises at least one agreement condition and at least one penalty. The at least one penalty is due in the case that the at least one agreement condition is violated.

In a further step the at least computer-executable control instruction is generated by modeling the at least one agreement commonly with the technical information using a formal description S3.

In the last step the at least one computer-executable control instruction to handle the penalty is provided S4.

### Exemplary use cases:

A service provider of a railway rolling stock has entered into a service level agreement with a rail operator that requires that a certain number of trains must be available on the beginning of a week at several train stations. The exact number depends on the train station. A penalty will be incurred if the specified number of trains is not provided as and when required.

The computer-implemented method according to the invention allows that the train dispatch system can automatically determine which of the available trains (i.e., the ones which are not undergoing maintenance at that time) should be moved to which train station so as to minimize or avoid potential penalties.

Alternatively, it could be automatically determined which maintenance activities should be accelerated, or if additional trains should be rented from other train owners operating in the same network to minimize or avoid the potential penalties.

As another example, a manufacturer of railway rolling stock including spare parts has supplied trains to different customers (owner or operators) across different networks, each with individual service agreements that stipulate that spare parts be supplied on request within a given time. If they cannot be supplied by the manufacturer in time, then a penalty will be due for delayed supply. In case of, e.g. a shortage of materials or skilled workers, the manufacturer may not be able to produce and supply the required number of spare parts.

The computer-implemented method according to the invention allows that the manufacturer can automatically determine which of the available spare parts should be shipped to which customer in which order so as to minimize or avoid potential penalties.

## Claims

1. Computer-implemented method for determining at least one computer-executable control instruction, comprising the steps:
a. Providing technical information regarding a technical system or at least one technical component of the technical system (S1);
b. Providing at least one agreement between at least two parties concerning at least one associated agreed object or at least one agreed service (S2); wherein
the at least one agreement comprises at least one agreement condition and at least one penalty; wherein
the at least one penalty is due in the case that the at least one agreement condition is violated;
c. Generating the at least computer-executable control instruction by modeling the at least one agreement commonly with the technical information using a formal description (S3); and
d. Providing the at least one computer-executable control instruction to handle the penalty (S4).

2. Computer-implemented method according to claim 1, wherein the technical system is a traffic engineering system, preferably a rail-way system.

3. Computer-implemented method according to claim 1 or claim 2, wherein the at least one agreement is a contractual agreement, preferably a Service Level Agreement.

4. Computer-implemented method according to any of the preceding claims, wherein the technical information comprises at least one determined state of the technical system or at least one determined state of the at least one technical component of the technical system.

5. Computer-implemented method according to any of the preceding claims, wherein the at least one agreement condition is a condition selected from the group comprising:
Availability of the at least one agreed object or at least one agreed service, date of delivery of the at least one agreed object or at least one agreed service, date of execution of the at least one agreement, price of the at least one agreed object or at least one agreed service, related costs, amount of the at least one agreed object or the at least one agreed service, duration of the agreement, duration of a warranty period and a warranty condition.

6. Computer-implemented method according to any of the preceding claims, wherein the formal description is a domain specific language.

7. Computer-implemented method according to any of the preceding claims, wherein the computer-implemented method further comprises executing the at least one computer-executable control instruction on a computing unit or a technical system.

8. Computer-implemented method according to any of the preceding claims, further comprising
- Outputting the at least one computer-executable control instruction;
- Storing the at least one computer-executable control instruction in a storage unit;
- Displaying the at least one computer-executable control instruction on a display unit;
- Transmitting the at least one computer-executable e control instruction to a computing unit; and/or
- Evaluating the at least one computer-executable control instruction.

9. A computer program product directly loadable into an internal memory of a computer, comprising software code portions for performing the steps according to any one of the preceding claims when said computer program product is running on a computer.

10. Technical system for performing the method according to claims 1-8.
